# EUROPEAN PATENT APPLICATION

(11) **EP 4 120 634 A1**
(43) Date of publication of application: **18.01.2023**
(21) Application number: 21767065.2
(22) Date of filing: 18.01.2021
(51) Int. Cl.: H04L 12/28

(54) **INFORMATION PROCESSING DEVICE, MASTER DEVICE, INFORMATION PROCESSING SYSTEM, NOTIFICATION METHOD, AND INFORMATION PROCESSING PROGRAM**

(30) Priority: 12.03.2020 JP 2020043201
(71) Applicant: OMRON Corporation, Kyoto-shi, Kyoto 600-8530 (JP)
(72) Inventor: TAKEDA, Takashi, Kyoto-shi, Kyoto 600-8530 (JP); MIZUMOTO, Hirohito, Kyoto-shi, Kyoto 600-8530 (JP)
(74) Representative: Becker, Eberhard
(86) International application number: PCT/JP2021/001402
(87) International publication number: WO 2021/181873

(57) **Abstract**

The present invention facilitates identification of the location of overload in a communication line of a communication network including a daisy chain connection. An information processing device (20) functions as a slave device connected to a master device (10) via a communication network including a daisy chain connection. The information processing device (20) comprises: a communication unit (220) which performs a communication process using the communication network; a storage control unit (212) which performs control to store in a storage unit (230) communication state information indicating a communication state in the communication network detected by the communication unit (220); a determination unit (213) which, with reference to the communication state information stored in the storage unit (230), determines whether a predetermined communication load or more is present in the communication network; and an output control unit (214) which, if the determination unit (213) determines that the communication load is present, performs control to output a result of the determination.

## Description

### Technical Field

The present invention relates to an information processing device, a master device, an information processing system, a notification method, and an information processing program.

### Related Art

As an industrial network system, a network system composed of a master device and a slave device is used, and technologies related to the network system are known. Patent Document 1 discloses an information processing device in which, in a situation of excessive communication such as where a DoS attack occurs, an adverse effect on processing with a relatively high priority is prevented. Patent Document 2 discloses a computer implementation method in which, in the case where traffic in a network is abnormal, it is determined that other computing devices are likely to be compromised.

### Prior-Art Documents

### Patent Documents

Patent Document 1: Japanese Patent Laid-open No. 2010-154576 (published on July 8,2010)
Patent Document 2: Japanese Translation of PCT International Application Publication No. 2018-538737 (published on June 1, 2017)

### SUMMARY OF THE INVENTION

### Problems to Be Solved by the Invention

In the network system as described above, a large amount of communication may occur in a communication network, a load may be applied on a communication line, and normal communication may become unavailable due to the occurrence of a delay or the like. Particularly, if the communication network includes a daisy chain connection, due to the complex configuration, it takes much time to identify a place of a communication line where an overload has occurred and a cause of the overload in the master device.

One aspect of the present invention has been made in view of the above problems, and aims to facilitate identification of a place where an overload has occurred in a communication line of a communication network including a daisy chain connection.

### Means for Solving the Problems

The present invention adopts the following configurations in order to solve the above problems.

In order to solve the above problems, an information processing device according to one aspect of the present invention is an information processing device functioning as a slave device connected to a master device via a communication network including a daisy chain connection. The information processing device includes: a communication part, performing communication processing by the communication network; a storage control part, performing control to store in a storage part communication state information indicating a communication state in the communication network detected in the communication part; a determination part, determining whether a communication load of a predetermined value or more is present in the communication network with reference to the communication state information stored in the storage part; and an output control part, in response to the determination part determining that the communication load is present, performing control to output a result of the determination.

In order to solve the above problems, a master device according to one aspect of the present invention is a master device connected to a slave device via a communication network including a daisy chain connection. The master device includes: a communication part, performing communication processing by the communication network; a determination part, acquiring communication state information indicating a communication state in the communication network detected in a communication part provided in the slave device, and determining whether a communication load of a predetermined value or more is present in the communication network; and an output control part, in response to the determination part determining that the communication load is present, performing control to output a result of the determination.

In order to solve the above problems, a notification method according to one aspect of the present invention is realized by an information processing device functioning as a slave device connected to a master device via a communication network including a daisy chain connection. The notification method includes the following. In a communication step, communication processing by the communication network is performed. In a storage step, control is performed to store communication state information indicating a communication state in the communication network detected in the communication step. In a determination step, whether a communication load of a predetermined value or more is present in the communication network is determined with reference to the communication state information stored in the storage step. In an output control step, in response to the determination in the determination step that the communication load is present, control is performed to output a result of the determination.

In order to solve the above problems, a notification method according to one aspect of the present invention is a notification method realized by a master device connected to a slave device via a communication network including a daisy chain connection. The notification method includes the following. In a communication step, communication processing by the communication network is performed. In a determination step, communication state information is acquired indicating a communication state in the communication network detected in a communication part provided in the slave device, and whether a communication load of a predetermined value or more is present in the communication network is determined. In an output control step, in response to the determination in the determination step that the communication load is present, control is performed to output a result of the determination.

### Effects of the Invention

According to one aspect of the present invention, identification of a place where an overload has occurred in a communication line of a communication network including a daisy chain connection can be facilitated.

### BRIEF DESCRIPTION OF THE DRAWINGS

FIG. 1 schematically illustrates an example of an information processing system according to Embodiment 1.
FIG. 2 schematically illustrates an example of a functional block diagram of the information processing system according to Embodiment 1.
FIG. 3 illustrates an example of a processing procedure in an information processing device according to Embodiment 1.
FIG. 4 illustrates an example of communication state information.
FIG. 5 schematically illustrates an example of an information processing system according to Embodiment 2.
FIG. 6 schematically illustrates an example of an information processing system according to a modification.

### DESCRIPTION OF THE EMBODIMENTS

An embodiment (hereinafter also written as "the present embodiment") according to one aspect of the present invention is hereinafter described based on the drawings.

### [Embodiment 1]

### §1 Application Example

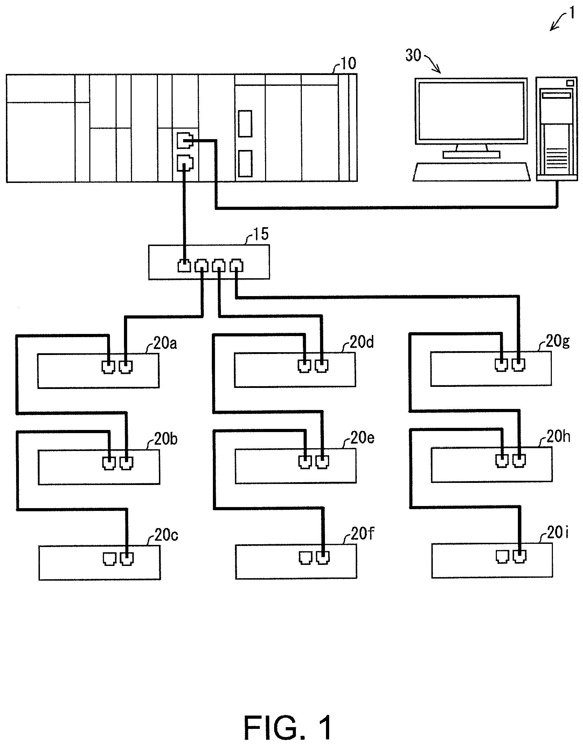

FIG. 1 schematically illustrates an example of a hardware configuration of an information processing system 1 according to the present embodiment. Slave devices (information processing devices) 20a to 20i according to the present embodiment are directly or indirectly connected to a master device 10 via a communication network including a daisy chain connection, and are devices realized as, for example, I/O units.

At least one of the slave devices 20a to 20i determines whether a communication load of a predetermined value or more is present in the communication network with reference to communication state information indicating a communication state in the communication network. A slave device 20 performing the determination of the communication load is configured to, in the case where the communication load is present, output a result of the determination.

According to the above configuration, it is determined whether a communication load is present on the slave device 20 side. Accordingly, in a communication line of a communication network of a complex configuration including a daisy chain connection, identification of a place where an overload has occurred can be facilitated.

### §2 Configuration Example

### <Information Processing System>

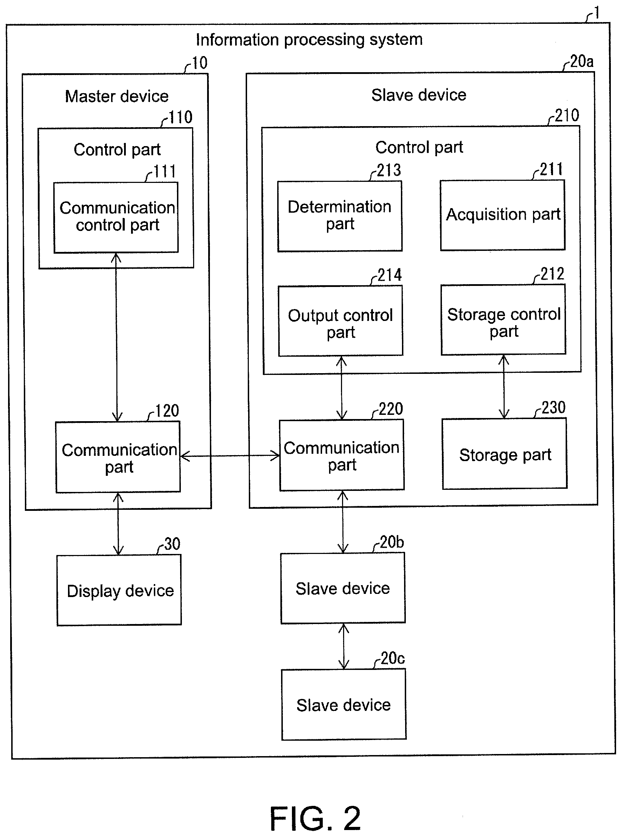

Next, an example of the hardware configuration of the information processing system according to the present embodiment is described in more detail with reference to FIG. 1 and FIG. 2.

FIG. 2 is a functional block diagram of the information processing system 1 shown in FIG. 1. However, in the functional block diagram of FIG. 2, the description of some devices is omitted for simplification.

As shown in FIG. 1 and FIG. 2, the information processing system 1 according to the present embodiment includes a master device 10, a hub device 15, a plurality of slave devices (information processing devices) 20a to 20i, and a display device 30. Each device is daisy-chained by a cable.

In this specification, a case is described where a network system constituted by the information processing system 1 is an EtherNet/IP^{®} network system. However, the present invention is not limited thereto. The above network system may be, for example, a network system of a standard such as MECHATROLINK^{®} or CC-Link^{®}. Further, the network system constituted by the information processing system 1 may be, for example, a field network system constituted by a group of manufacturing devices in a factory. The master device 10 may be a device such as a programmable logic controller (PLC). In the following description, when no particular distinction is made among the slave devices 20a to 20i, any one of them may be simply referred to as the slave device 20. In the information processing system 1 shown in FIG. 1 and FIG. 2, a total of nine slave devices 20 are daisy-chained to the master device 10 via the hub device 15. However, there may be a configuration in which one to eight, or ten or more slave devices 20 are connected to the master device 10.

The master device 10 includes a control part 110 and a communication part 120. The control part 110 is a control device integrating the entire master device 10, and also functions as a communication control part 111.

The control part 110 includes a central processing unit (CPU), a random access memory (RAM), a read only memory (ROM) or the like, and controls each component according to information processing. The same applies to the control part 210 to be described later

The communication control part 111 controls communication processing by the communication part 120. The communication part 120 performs communication processing with the slave device 20 and the display device 30 or the like. The master device 10 may include a memory (storage part) (not shown).

The slave device 20 includes a control part 210, a communication part 220, and a storage part 230. The control part 210 is a control device integrating the entire slave device 20, and also functions as an acquisition part 211, a storage control part 212, a determination part 213, and an output control part 214.

The acquisition part 211 acquires communication state information indicating a communication state in a communication network detected in the communication part 220. Here, the communication state information may include at least information indicating a communication state of a frame in a MAC layer (data link layer), or may include information indicating a communication state in other layers of an OSI reference model. Here, the frame is a data format used in a protocol of the MAC layer, such as EtherNet/IP. A detailed example of the communication state information will be described later.

The storage control part 212 stores and reads data in and from the storage part 230. For example, the storage control part 212 performs processing for storing the above communication state information acquired by the acquisition part 211 in the storage part 230. Here, as the storage part 230, both a temporary storage part using a volatile memory or the like and a long-term storage part using a non-volatile memory may be provided. The storage control part 212 may, for example, store in the temporary storage part the communication state information necessary for determination processing in the determination part 213, and store in the long-term storage part the communication state information at a time when a load occurs.

The determination part 213 determines whether a communication load of a predetermined value or more is present in the communication network with reference to the communication state information stored in the storage part 230. The determination part 213 performs other determination processing to be described later. The output control part 214 controls communication processing by the communication part 220. In the case where the determination part 213 determines that the communication load of the predetermined value or more is present in the communication network, the output control part 214 performs control to output a result of the determination.

The communication part 220 performs communication processing with the master device 10 and the other slave devices 20. The display device 30 is a device (for example, a personal computer) including a display capable of displaying various information. A human machine interface (HMI) may be used as the display device 30.

A communication load determination function of the slave device 20 may be provided in an HMI, a personal computer, a PLC, a switching hub or the like.

### §3 Operation Example

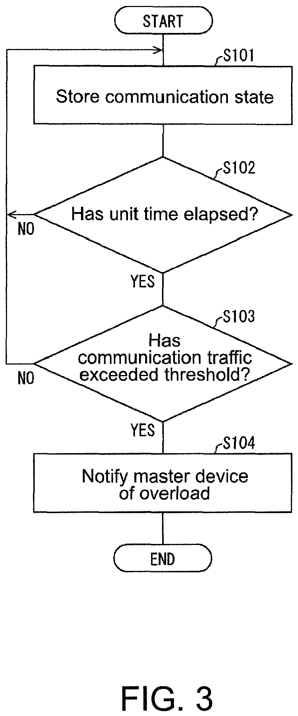

Next, a first operation example of the information processing system 1 is described with reference to FIG. 3. FIG. 3 is a flowchart illustrating an example of a processing procedure in the slave device 20. The slave device 20 repeatedly executes processing based on the flowchart of FIG. 3 in parallel with a normal control operation to be processed by itself. The processing procedure described below is only an example, and each processing may be changed wherever possible. With respect to the processing procedure described below, steps can be omitted, replaced, and added as appropriate depending on embodiments.

### (Step S101)

In step S101, the acquisition part 211 acquires the communication state information indicating the communication state in the communication network. The above communication state information may be acquired by the acquisition part 211 by monitoring data transmitted and received by the communication part 220. In this step S101, the storage control part 212 performs processing for storing the communication state information acquired by the acquisition part 211 in the storage part 230.

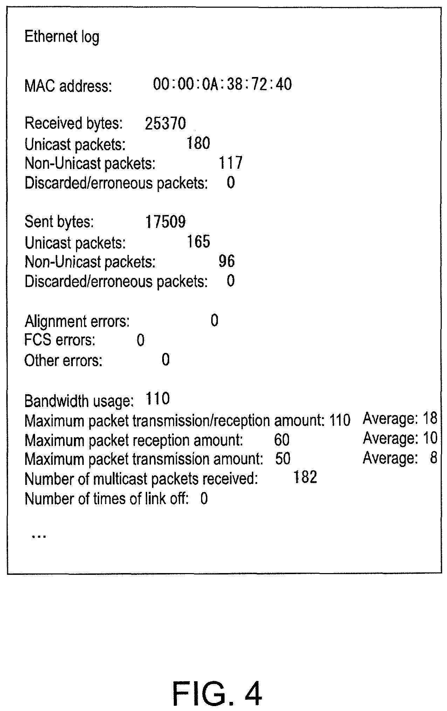

FIG. 4 illustrates an example of the communication state information. As shown in FIG. 4, the communication state information may include a communication speed in the communication network, the amount of data and the number of packets transmitted and received, information regarding communication errors, bandwidth usage or the like.

### (Step S102)

In subsequent step S102, the determination part 213 determines whether a predetermined unit time has elapsed since the determination processing in the most recent step S103 was performed. Here, the predetermined unit time is not limited to a specific time, and may be, for example, 1 second or 10 seconds.

If the determination part 213 determines that the predetermined unit time has elapsed since the determination processing in the most recent step S103 was performed, the determination part 213 subsequently executes the processing of step S103; if the determination part 213 determines that the predetermined unit time has not elapsed, the processing from step S101 is subsequently repeated.

In the case where the determination of this step S102 is executed for the first time after the information processing system 1 is started and the communication processing by the communication part 220 is started, the determination part 213 subsequently executes the processing of step S103.

### (Step S103)

In subsequent step S103, the determination part 213 determines whether communication traffic within the predetermined unit time indicated by the communication state information stored in the storage part 230 has exceeded a predetermined threshold. In the case where the storage part 230 stores the communication state information indicating the communication state of the frame in the MAC layer in step S101, the determination part 213 performs the above determination with reference to the communication state information. If the determination part 213 determines that the communication traffic has exceeded the predetermined threshold, the processing of step S104 is subsequently executed; if the determination part 213 determines that the communication traffic has not exceeded the predetermined threshold, the processing from step S101 is subsequently repeated.

A maximum packet transmission and reception amount of 110, a maximum packet reception amount of 60, and a maximum packet transmission amount of 50 in the example of FIG. 4 indicate an example of the predetermined threshold to be compared with a packet transmission and reception amount in the predetermined unit time. The packet transmission and reception amount is a kind of communication traffic. In FIG. 4, 18, 10, and 8 described as average values respectively indicate the packet transmission and reception amount, the packet reception amount, and the packet transmission amount in the slave device 20 measured in the predetermined unit time. In the example shown in FIG. 4, since none of the packet transmission and reception amount, the packet reception amount and the packet transmission amount has exceeded the above values as the thresholds, the processing from step S101 is subsequently repeated. As in the above example shown in FIG. 4, the determination processing by the determination part 213 in this step S103 may be executed with respect to a plurality of items related to communication traffic. If none of the items has exceeded a predetermined threshold, the processing from step S101 may be repeated; if any of the items has exceeded the predetermined threshold, the processing of step S104 may be subsequently executed.

As another aspect, the determination part 213 may be configured to compare a bandwidth usage in the slave device 20 measured in the predetermined unit time with a bandwidth usage as a predetermined threshold. The bandwidth usage is a kind of communication traffic. The bandwidth usage of 110 in FIG. 4 indicates an example of the bandwidth usage as the above predetermined threshold.

### (Step S104)

In subsequent step S104, the output control part 214 transmits information indicating a result of the determination by the determination part 213 to the master device 10. From another aspect, the output control part 214 is configured to, in the case where the determination part 213 determines that a communication load of a predetermined value or more is present in the communication network, function as a communication control part performing control to transmit a result of the determination to the master device 10. Accordingly, the information is transmitted to the master device 10 via the other slave devices 20 and the hub device 15 as appropriate. The master device 10 may display the received information on, for example, the display device 30.

The above has described an example of a notification method being a notification method executed by an information processing device according to the present embodiment and being a notification method realized by an information processing device functioning as the slave device 20 connected to the master device 10 via a communication network including a daisy chain connection. The notification method includes the following. In a communication step, communication processing by the communication network is performed. In a storage step, control is performed to store communication state information indicating a communication state in the communication network detected in the communication step. In a determination step, whether a communication load of a predetermined value or more is present in the communication network is determined with reference to the communication state information stored in the storage step. In an output control step, in response to the determination in the determination step that the communication load is present, control is performed to output a result of the determination.

As another aspect, the determination part 213 in step S103 may be configured to determine whether a rate of increase in the communication traffic within the predetermined unit time indicated by the communication state information stored in the storage part 230 has exceeded a predetermined threshold.

According to the configuration of the present embodiment, by referring to the information transmitted to the master device 10, it is possible to easily grasp the communication state of the communication network in which an overload has occurred and identify a place where the overload has occurred.

### [Embodiment 2]

A second embodiment of the present invention is described below. For convenience of description, members having the same functions as those described in the above embodiment are denoted by the same reference numerals, and the description will not be repeated. In the present embodiment, an example of the following configuration is described. In the case where an overload occurs in a communication network, a slave device transmits a determination result indicating to that effect to a master device and then notifies the master device by outputting light or sound.

### §1 Configuration Example

### <Information Processing System>

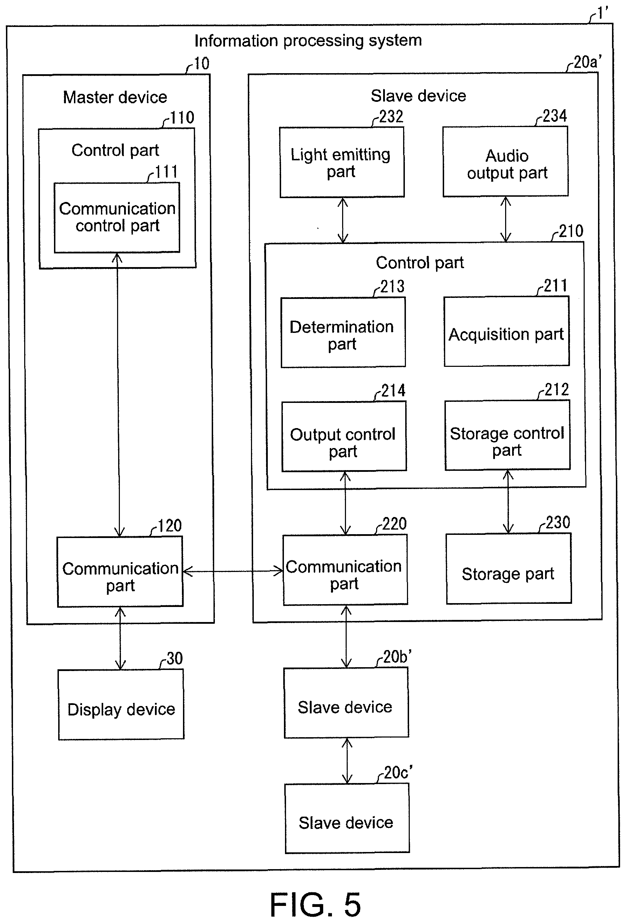

FIG. 5 is a functional block diagram of an information processing system 1' according to the present embodiment. In the information processing system 1' according to the present embodiment, slave device 20a' to 20c' and slave device 20d' to 20i' not shown are configured to further include a light emitting part 232 such as an LED or a light capable of light emission, and an audio output part 234 such as a speaker. The output control part 214 according to the present embodiment performs processing for controlling an output by the light emitting part 232 and the audio output part 234, in addition to controlling the communication processing by the communication part 220. In the following description, when no particular distinction is made among the slave devices 20a' to 20i', any one of them may be simply referred to as the slave device 20'.

### §2 Operation Example

An operation of the information processing system 1' according to the present embodiment differs from the processing shown in the flowchart of FIG. 3 in that the following processing of step S204 is executed following the processing of step S104 described above. Hereinafter, the processing of step S204 is described.

### (Step S204)

In step S204, the output control part 214 controls the output by at least one of the light emitting part 232 and the audio output part 234 according to the result of the determination of the determination part 213 in step S103. For example, as the above communication traffic indicated by the communication state information becomes further greater than the predetermined threshold, the output control part 214 may cause the light emitting part 232 to emit a stronger light, or may cause the audio output part 234 to emit a louder sound.

According to the configuration of the present embodiment, it is possible for a user to easily grasp whether a communication overload is present in any place without checking the master device 10. The processing of step S204 described above may be configured to be executed before the processing of step S104.

### [Modification 1 of Embodiments 1 and 2]

The slave device 20 (20') may be configured to further include a threshold change part 215 that changes the predetermined threshold as illustrated in FIG. 4 according to an external instruction.

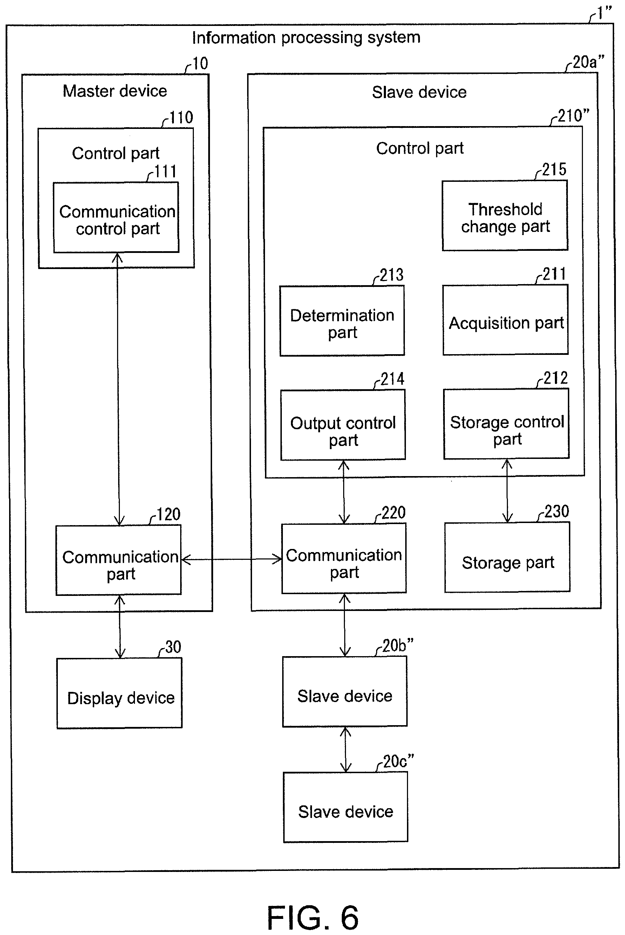

FIG. 6 is a functional block diagram of an information processing system 1" according to the present modification. As shown in FIG. 6, the control part 210 may be configured to further include the threshold change part 215.

The external instruction may be, for example, a user operation of connecting a personal computer on which a program capable of changing the setting of the slave device 20 is installed, or may be an instruction by a command from a PLC connected to the slave device 20.

The predetermined threshold specified by the above external instruction may be according to the configuration of the communication network, or the arrangement of the slave device 20 in the configuration of the communication network. Alternatively, the above external instruction may include information indicating the configuration of the communication network or the arrangement of the slave device 20 in the configuration of the communication network, and the threshold change part 215 may be configured to set the predetermined threshold according to the information.

According to the configuration of the present modification, with respect to each slave device 20, it is possible to set suitable thresholds different from each other.

### [Modification 2 of Embodiments 1 and 2]

The storage control part 212 may be configured to store in the long-term storage part of the storage part 230 information indicating the result of the determination by the determination part 213 in step S103. The storage control part 212 may be configured to, in the case where it is determined by the determination part 213 that the communication load of the predetermined value or more is present, store the communication state information at that time as a log in the long-term storage part of the storage part 230 along with the information indicating the result of the determination. As the communication state information stored as the log, in addition to the communication state at the time when it is determined that the communication load is present, information on at least one of the communication state a predetermined period before the time and the communication state the predetermined period later than the time may be recorded.

According to the configuration of the present modification, by referring to the log recorded in, for example, the long-term storage part such as a non-volatile memory, it is possible to specify a reason of occurrence of the communication load even after a certain amount of time has elapsed since the communication load occurred.

### [Modification 3 of Embodiments 1 and 2]

A part of the processing in the slave device 20 (20') may be configured to be executed in the master device 10. For example, the master device 10 may be configured to have a function corresponding to the determination part 213 and the output control part (communication control part) 214.

In other words, the master device 10 according to the above example is the master device 10 connected to the slave device 20 via a communication network including a daisy chain connection. The master device 10 is configured to include: the communication part 120, performing communication processing by the communication network; a determination part, acquiring communication state information indicating a communication state in the communication network detected in the communication part 220 provided in the slave device 20, and determining whether a communication load of a predetermined value or more is present in the communication network; and an output control part, in response to the determination part determining that the communication load is present, performing control to output a result of the determination. A notification method according to the present modification includes a communication step, a determination step and an output control step corresponding to the configuration.

The determination part may determine that the communication load of the predetermined value or more is present in the communication network when communication traffic within a predetermined unit time indicated by the communication state information exceeds a predetermined threshold. The master device 10 may be configured to further include a storage control part performing control to store in a storage part the communication state information indicating the communication state in the communication network. The storage control part may be configured to, in the case where it is determined by the determination part that the communication load is present, store the communication state information at that time as a log in the storage part.

According to the configuration of the present modification, identification of a place where an overload has occurred in a communication line of a communication network of a complex configuration including a daisy chain connection may be facilitated.

### [Conclusion]

An information processing device (20, 20') according to one aspect of the present invention is an information processing device functioning as a slave device connected to a master device (10) via a communication network including a daisy chain connection. The information processing device includes: a communication part (220), performing communication processing by the communication network; a storage control part (212), performing control to store in a storage part (230) communication state information indicating a communication state in the communication network detected in the communication part; a determination part (213), determining whether a communication load of a predetermined value or more is present in the communication network with reference to the communication state information stored in the storage part; and an output control part (214), in response to the determination part determining that the communication load is present, performing control to output a result of the determination. In the above configuration, it is determined whether a communication load is present on the slave device side. Accordingly, identification of a place where an overload has occurred in a communication line of a communication network of a complex configuration including a daisy chain connection can be facilitated.

In the information processing device according to the above one aspect, the determination part may determine that the communication load of the predetermined value or more is present in the communication network when communication traffic within a predetermined unit time indicated by the communication state information exceeds a predetermined threshold. According to this configuration, whether a communication overload is present can be accurately determined by relatively simple processing in which the communication traffic within the predetermined unit time is compared with the predetermined threshold.

In the information processing device according to the above one aspect, the storage control part may, in the case where it is determined by the determination part that the communication load is present, store the communication state information at that time as a log in the storage part. According to this configuration, by referring to the log recorded in, for example, a non-volatile memory, it is possible to specify a reason of occurrence of the communication load even after a certain amount of time has elapsed since the communication load occurred.

In the information processing device according to the above one aspect, the output control part may be a communication control part performing control to transmit the result of the determination to the master device. According to this configuration, the master device is able to acquire information indicating that an overload is present in the communication network.

In the information processing device (20') according to the above one aspect, the output control part may control an output by at least one of a light emitting part (232) and an audio output part (234) according to the result of the determination. According to this configuration, at a site where the slave device is provided, the user is able to easily recognize the slave device in which an overload is detected in the communication network.

In the information processing device according to the above one aspect, the storage control part may store in the storage part the communication state information indicating a communication state of a frame in a MAC layer. The determination part may determine whether the communication load of the predetermined value or more is present in the communication network with reference to the communication state information. According to this configuration, since the communication state of the frame in the MAC layer can be relatively easily confirmed by software that controls the MAC layer, whether a communication overload is present can be relatively easily and accurately determined.

In the information processing device according to the above one aspect, a threshold change part (215) changing the predetermined threshold according to an external instruction may further be provided. According to this configuration, for example, a threshold can be set according to the configuration of the communication network or the arrangement of the information processing device in the configuration of the communication network.

A master device (10) according to one aspect of the present invention is a master device connected to a slave device (20, 20') via a communication network including a daisy chain connection. The master device includes: a communication part (120), performing communication processing by the communication network; a determination part (213), acquiring communication state information indicating a communication state in the communication network detected in a communication part (220) provided in the slave device, and determining whether a communication load of a predetermined value or more is present in the communication network; and an output control part (214), in response to the determination part determining that the communication load is present, performing control to output a result of the determination. According to this configuration, identification of a place where an overload has occurred in a communication line of a communication network of a complex configuration including a daisy chain connection may be facilitated.

In the master device according to the above one aspect, the determination part may determine that the communication load of the predetermined value or more is present in the communication network when communication traffic within a predetermined unit time indicated by the communication state information exceeds a predetermined threshold. According to this configuration, whether a communication overload is present can be accurately determined by relatively simple processing in which the communication traffic within the predetermined unit time is compared with the predetermined threshold.

In the master device according to the above one aspect, a storage control part performing control to store in the storage part the communication state information indicating the communication state in the communication network may further be provided. The storage control part may be configured to, in the case where it is determined by the determination part that the communication load is present, store the communication state information at that time as a log in the storage part. According to this configuration, by referring to the log recorded in, for example, a non-volatile memory, it is possible to specify a reason of occurrence of the communication load even after a certain amount of time has elapsed since the communication load occurred.

An information processing system (1, 1') according to one aspect of the present invention may include a plurality of slave devices including a slave device composed of the information processing device as described in any of the above; and one or more master devices. The plurality of slave devices and the master device may be connected via a communication network including a daisy chain connection. According to this configuration, even in a complex communication network such as one including a daisy chain connection, an information processing system can be realized in which identification of a place where an overload has occurred can be facilitated.

An information processing system (1, 1') according to one aspect of the present invention may include one or more master devices as described in any of the above; and a plurality of slave devices. The master device and the plurality of slave devices may be connected via a communication network including a daisy chain connection. Even in a complex communication network such as one including a daisy chain connection, an information processing system can be realized in which identification of a place where an overload has occurred can be facilitated.

A notification method according to one aspect of the present invention is a notification method realized by an information processing device functioning as a slave device (20, 20') connected to a master device (10) via a communication network including a daisy chain connection. The notification method includes the following. In a communication step, communication processing by the communication network is performed. In a storage step, control is performed to store communication state information indicating a communication state in the communication network detected in the communication step. In a determination step, whether a communication load of a predetermined value or more is present in the communication network is determined with reference to the communication state information stored in the storage step. In an output control step, in response to the determination in the determination step that the communication load is present, control is performed to output a result of the determination. According to this configuration, identification of a place where an overload has occurred in a communication line of a communication network including a daisy chain connection can be facilitated.

A notification method according to one aspect of the present invention is a notification method realized by a master device (10) connected to a slave device (20, 20') via a communication network including a daisy chain connection. The notification method includes the following. In a communication step, communication processing by the communication network is performed. In a determination step, communication state information is acquired indicating a communication state in the communication network detected in a communication part (220) provided in the slave device, and whether a communication load of a predetermined value or more is present in the communication network is determined. In an output control step, in response to the determination in the determination step that the communication load is present, control is performed to output a result of the determination. According to this configuration, identification of a place where an overload has occurred in a communication line of a communication network including a daisy chain connection can be facilitated.

An information processing program according to one aspect of the present invention is a program for causing a computer to function as the information processing device as described in any of the above. The information processing program causes the computer to function as the storage control part, the determination part, and the output control part. According to this configuration, the same effects as those of the information processing device according to one aspect of the present invention can be achieved.

An information processing program according to one aspect of the present invention is a program for causing a computer to function as the master device as described in any of the above. The information processing program causes the computer to function as the determination part and the output control part. According to this configuration, the same effects as those of the master device according to one aspect of the present invention can be achieved.

### [Implementation Example by Software]

A control block (particularly, the acquisition part 211, the storage control part 212, the determination part 213 and the output control part 214) of the slave device 20 and a control block (particularly, the communication control part 111, as well as the determination part, the output control part and the storage control part in the above modification) of the master device 10 may be realized by a logic circuit (hardware) formed in an integrated circuit (IC chip) or the like, or may be realized by software.

In the latter case, the slave device 20 or the master device 10 includes a computer executing commands of a program being software that realizes each function. This computer includes, for example, one or more processors, and includes a computer-readable recording medium storing the above program. In the above computer, an object of the present invention is achieved by the above processor reading the above program from the above recording medium and executing the above program. As the above processor, a central processing unit (CPU), for example, can be used. As the above recording medium, a "non-transitory tangible medium," for example, in addition to a read only memory (ROM), a tape, a disk, a card, a semiconductor memory, a programmable logic circuit or the like, can be used. A random access memory (RAM) or the like for developing the above program may further be provided. The above program may be supplied to the above computer via an arbitrary transmission medium (such as a communication network or broadcast wave) capable of transmitting the program. One aspect of the present invention may be realized in the form of a data signal embedded in a carrier wave, the data signal being embodied by the above program by electronic transmission.

The present invention is not limited to the embodiments described above, and may be modified in various ways within the scope of the claims. An embodiment derived from a proper combination of technical means disclosed in respective different embodiments is also encompassed in the technical scope of the present invention.

### Description of Reference Numerals

1, 1': information processing system
10: master device
15: hub device
20, 20': slave device (information processing device)
30: display device
110, 210: control part
111: communication control part
120, 220: communication part
211: acquisition part
212: storage control part
213: determination part
214: output control part (communication control part)
215: threshold change part
230: storage part
232: light emitting part
234: audio output part

## Claims

1. An information processing device, functioning as a slave device connected to a master device via a communication network comprising a daisy chain connection, the information processing device comprising:
a communication part, performing communication processing by the communication network;
a storage control part, performing control to store in a storage part communication state information indicating a communication state in the communication network detected in the communication part;
a determination part, determining whether a communication load of a predetermined value or more is present in the communication network with reference to the communication state information stored in the storage part; and
an output control part, in response to the determination part determining that the communication load is present, performing control to output a result of the determination.

2. The information processing device according to claim 1, wherein
the determination part determines that a communication load of a predetermined value or more is present in the communication network in response to communication traffic within a predetermined unit time indicated by the communication state information exceeding a predetermined threshold.

3. The information processing device according to claim 1 or 2, wherein,
in response to the determination by the determination part that the communication load is present, the storage control part stores communication state information at that time as a log in the storage part.

4. The information processing device according to any one of claims 1 to 3, wherein
the output control part is a communication control part performing control to transmit the result of the determination to the master device.

5. The information processing device according to any one of claims 1 to 4, wherein
the output control part controls an output by at least one of a light emitting part and an audio output part according to the result of the determination.

6. The information processing device according to any one of claims 1 to 5, wherein
the storage control part stores in a storage part communication state information indicating a communication state of a frame in a MAC layer; and
the determination part determines whether a communication load of a predetermined value or more is present in the communication network with reference to the communication state information.

7. The information processing device according to claim 2, further comprising:
a threshold change part, changing the predetermined threshold according to an external instruction.

8. A master device, connected to a slave device via a communication network comprising a daisy chain connection, the master device comprising:
a communication part, performing communication processing by the communication network;
a determination part, acquiring communication state information indicating a communication state in the communication network detected in a communication part provided in the slave device, and determining whether a communication load of a predetermined value or more is present in the communication network; and
an output control part, in response to the determination part determining that the communication load is present, performing control to output a result of the determination.

9. The master device according to claim 8, wherein
the determination part determines that a communication load of a predetermined value or more is present in the communication network in response to communication traffic within a predetermined unit time indicated by the communication state information exceeding a predetermined threshold.

10. The master device according to claim 8 or 9, further comprising:
a storage control part, performing control to store in a storage part communication state information indicating a communication state in the communication network, wherein
in response to the determination by the determination part that the communication load is present, the storage control part stores communication state information at that time as a log in a storage part.

11. An information processing system, comprising:
a plurality of slave devices, comprising a slave device composed of the information processing device according to any one of claims 1 to 7; and
one or more master devices, wherein
the plurality of slave devices and the master device are connected via a communication network comprising a daisy chain connection.

12. An information processing system, comprising:
one or more master devices according to any one of claims 8 to 10; and
a plurality of slave devices, wherein
the master device and the plurality of slave devices are connected via a communication network comprising a daisy chain connection.

13. A notification method, realized by an information processing device functioning as a slave device connected to a master device via a communication network comprising a daisy chain connection, the notification method comprising:
in a communication step, performing communication processing by the communication network;
in a storage step, performing control to store communication state information indicating a communication state in the communication network detected in the communication step;
in a determination step, determining whether a communication load of a predetermined value or more is present in the communication network with reference to the communication state information stored in the storage step; and
in an output control step, in response to the determination in the determination step that the communication load is present, performing control to output a result of the determination.

14. A notification method, realized by a master device connected to a slave device via a communication network comprising a daisy chain connection, the notification method comprising:
in a communication step, performing communication processing by the communication network;
in a determination step, acquiring communication state information indicating a communication state in the communication network detected in a communication part provided in the slave device, and determining whether a communication load of a predetermined value or more is present in the communication network; and
in an output control step, in response to the determination in the determination step that the communication load is present, performing control to output a result of the determination.

15. An information processing program that is a program for causing a computer to function as the information processing device according to any one of claims 1 to 7, wherein
the information processing program is for causing a computer to function as the storage control part, the determination part, and the output control part.

16. An information processing program that is a program for causing a computer to function as the master device according to any one of claims 8 to 10, wherein
the information processing program is for causing a computer to function as the determination part and the output control part.
